(19) **Europäisches Patentamt / European Patent Office / Office européen des brevets**

(11) **EP 4 729 421 A1**

(12) **EUROPEAN PATENT APPLICATION**
published in accordance with Art. 153(4) EPC

(43) Date of publication:
**22.04.2026 Bulletin 2026/17**

(21) Application number: **23941542.5**

(22) Date of filing: **13.06.2023**

(51) International Patent Classification (IPC):
***B64G 1/22*** (2006.01)     ***B64G 1/62*** (2006.01)

(52) Cooperative Patent Classification (CPC):
**B64G 1/22; B64G 1/62**

(86) International application number:
**PCT/JP2023/021962**

(87) International publication number:
**WO 2024/257235 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Bull Co., Ltd.**
**Utsunomiya-shi, Tochigi 320-0806 (JP)**

(72) Inventors:
• **KAWAMURA, Masaaki**
**Utsunomiya-shi, Tochigi 320-0806 (JP)**
• **KAMACHI, Koh**
**Utsunomiya-shi, Tochigi 320-0806 (JP)**
• **TSURUDA, Yoshihiro**
**Utsunomiya-shi, Tochigi 320-0806 (JP)**
• **ISHIGAKI, Nozomu**
**Utsunomiya-shi, Tochigi 320-0806 (JP)**

(74) Representative: **Bardehle Pagenberg**
**Partnerschaft mbB**
**Patentanwälte Rechtsanwälte**
**Prinzregentenplatz 7**
**81675 München (DE)**

(54) **ORBIT SEPARATION DEVICE AND ORBIT SEPARATION METHOD**

(57)    A deorbit device according to one aspect of the present invention is a deorbit device mounted on an object moving in an orbit in space, the deorbit device including a tether that expands by gas supplied thereinto to form a predetermined three-dimensional shape to be subjected to atmospheric drag to deorbit the object from the orbit.

*FIG.1*

EP 4 729 421 A1

## Description

### Technical Field

The present invention relates to a deorbit device and a deorbiting method.

### Background Art

Many spacecraft, such as artificial satellites and space stations, are flying in Earth orbit. Spacecraft that remain in orbit after the completion of their missions, as well as fragments of damaged spacecraft, constitute so-called space debris (space junk), and this has become a problem. To dispose of debris from orbit, a method called PMD (Post Mission Disposal) is used, in which a device for deorbiting (deorbit device) pre-mounted on a spacecraft is activated to remotely remove the spacecraft from orbit.

For example, Patent Literature 1 discloses a decelerator structured to use a frame to deploy a planar film component for being subjected to atmospheric drag. Patent Literature 2 discloses another technique for deorbiting spacecraft using the Lorentz force generated by an elongated tape-like conductive tether extended out into space from the spacecraft.

### Citation List

### Patent Literature

Patent Literature 1: Patent Publication JP-A-2022-143395
Patent Literature 2: Patent Publication JP-A-2021-115713

Summary of Invention

Technical Problem

The structure that uses a frame to deploy a planar film component, such as the decelerator described in Patent Literature 1, tends to be heavy and bulky. In a case where the film component is deployed in a planar shape, the rotational torque caused by atmospheric drag increases, which can make it difficult to maintain an attitude subjected to atmospheric drag. The elongated tape-like tether described in Patent Literature 2 may require advanced control of the deployment speed and adjustment in the device attitude so as not to cause insufficient deployment nor entanglement in the course of the deployment.

Accordingly, an object of the present invention is to provide a deorbit device and a deorbiting method that allow easier tether deployment and that enable an attitude subjected to atmospheric drag to be easily maintained.

Solution to Problem

A deorbit device according to one aspect of the present invention is a deorbit device mounted on an object moving in an orbit in space, the deorbit device including a tether that expands by gas supplied thereinto to form a predetermined three-dimensional shape to be subjected to atmospheric drag to deorbit the object from the orbit.

According to this aspect, the tether extends by gas supplied thereinto to form a predetermined three-dimensional shape that is subjected to atmospheric drag for deorbiting the object from the orbit. This facilitates deployment of the tether and allows the tether to more easily maintain an attitude subjected to atmospheric drag.

Advantageous Effect of Invention

The present invention can provide a deorbit device and a deorbiting method.

### Brief Description of Drawings

[Figure 1] Figure 1 is an overview diagram illustrating an outer view of a deorbit device 3 according to one embodiment mounted on a spacecraft 2 in one state.

[Figure 2] Figure 2 is an overview diagram illustrating an outer view of the deorbit device 3 according to the embodiment mounted on the spacecraft in another state.

[Figure 3] Figure 3 is a block diagram illustrating one example of a functional configuration of the deorbit device 3 according to the embodiment.

[Figure 4] Figure 4 is a diagram for explaining the dimensions of a tether 31 and how the dimensions affect the behaviors of the tether 31.

[Figure 5] Figure 5 is a graph showing the relationship between the orbit altitude and the aspect ratio threshold of tethers of varying weights.

[Figure 6A] Figure 6A is a diagram showing an example of a cross-sectional shape perpendicular to the longitudinal direction of the tether 31 in a variation example.

[Figure 6B] Figure 6B is a diagram showing another example of a cross-sectional shape perpendicular to the longitudinal direction of the tether 31 in a variation example.

[Figure 6C] Figure 6C is a diagram showing yet another example of a cross-sectional shape perpendicular to the longitudinal direction of the tether 31 in a variation example.

[Figure 6D] Figure 6D is a diagram showing yet another example of a cross-sectional shape perpendicular to the longitudinal direction of three tethers 31 of a deorbit device 3 in a variation example.

[Figure 7] Figure 7 is a diagram showing a cross sectional shape parallel to the longitudinal direction of the tether 31 in a variation example.

[Figure 8A] Figure 8A is a schematic diagram illustrating an outer view of two tethers 31 and a film part 38 of a deorbit device 3 in a variation example.

[Figure 8B] Figure 8B is a schematic diagram illustrating an outer view of six tethers 31 of a deorbit device 3 in a variation example.

**Description of Embodiments**

A preferred embodiment of the present invention is described with reference to the accompanying drawing (elements given the same reference numerals in each drawing have the same or similar configuration).

(1) Overall configuration

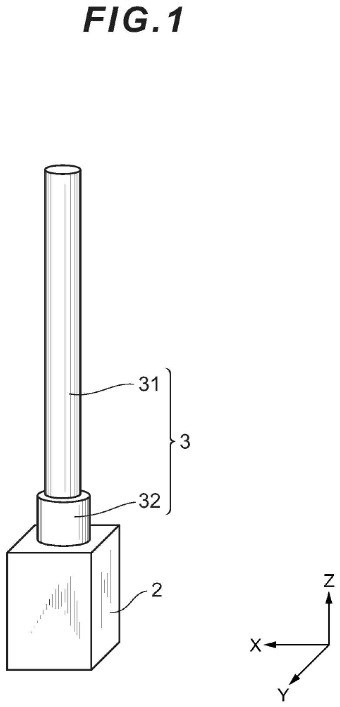

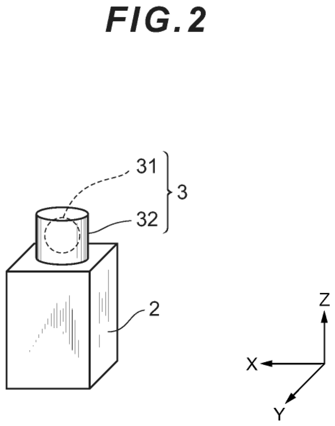

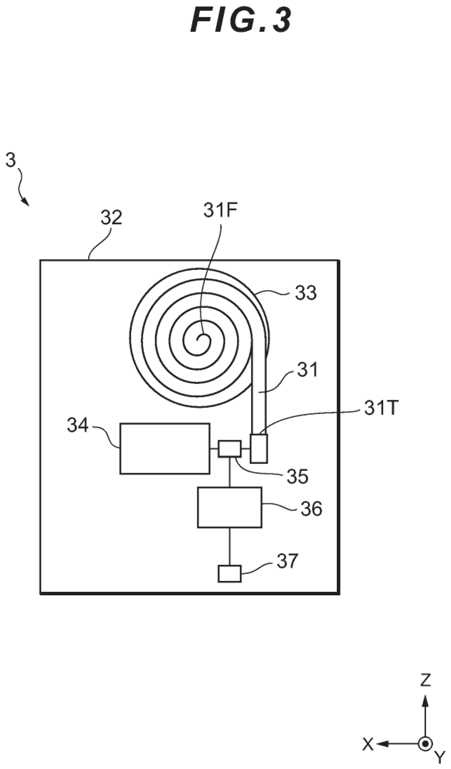

The overall configuration of a deorbit device 3 according to this embodiment is described with reference to Figure 1 through Figure 3. Figure 1 is an overview diagram illustrating an outer view of a deorbit device 3 according to one embodiment mounted on a spacecraft 2 in one state. Figure 2 is an overview diagram illustrating an outer view of the deorbit device 3 according to the embodiment mounted on the spacecraft in another state. Figure 3 is a block diagram illustrating one example of a functional configuration of the deorbit device 3 according to the embodiment.

In Figure 1 through Figure 3, the direction in which the spacecraft 2 moves (i.e., the direction of Earth orbit or other celestial orbit) is defined as the X-axis. The horizontal direction perpendicular to the X-axis is defined as the Y-axis. The direction perpendicular to both the X-axis and the Y-axis is defined as the Z-axis. More specifically, the direction along the Z-axis opposite Earth (the positive Z-axis direction in Figure 1) may sometimes be referred to as the "zenith direction," and the direction along the Z-axis toward Earth may be referred to as the "nadir direction."

The spacecraft 2 moves in orbit around Earth in space. The spacecraft 2 may be any object that moves in orbit. Examples of spacecraft include artificial satellites, rockets, space stations, and the like. The spacecraft 2 has a propulsion function, for example, and is configured to be movable in directions along the orbit (e.g., the positive X-axis direction). The mechanism for providing the propulsion function is not particularly limited, and may be achieved using a known mechanism such as an ion engine. The altitude of the orbit is not particularly limited, and may range between 200 and 1,000 km, for example. The spacecraft 2 is not particularly limited to the examples mentioned above as long as it is an object that moves in orbit. Examples of spacecraft may also include objects without a propulsion function, such as space debris.

The deorbit device 3 is mounted on an object such as a spacecraft 2 that moves in orbit in space, to deorbit this object from orbit. The deorbit device 3 may include a main body 32 and a tether 31 configured to be tiltable with reference to the main body 32 as a base point.

The tether 31 is configured, for example, to expand to form a predetermined three-dimensional shape by gas supplied to its interior from a gas source 34 provided to the main body 32. In other words, the tether 31 according to this embodiment has an inflatable structure. Therefore, compared to tethers without an inflatable structure, in the deorbit device 3 according to this embodiment the tether 31can be deployed and the deployed state can be maintained more easily. The "predetermined three-dimensional shape" formed herein is not particularly limited to a predetermined three-dimensional shape when it is fully formed but may include shapes with some twists or bends in the predetermined three-dimensional shape.

One end of the tether 31 may be configured as a fixed end 31T fixedly attached to the main body 32, while the other end may be configured as a free end 31F not secured to the main body 32. The main body 32 is configured, for example, to accommodate the tether 31 inside as shown in Figure 2 during a mission of the spacecraft 2. The main body 32 is configured to release the free end 31F of the tether 31 into space at a predetermined time such as when the mission of the spacecraft 2 is complete, and to deploy the tether 31 by supplying a predetermined gas into its interior so as to expand the tether 31 into the predetermined three-dimensional shape. Figure 1 shows a state of the tether 31 deployed outside the main body 32 (space). While the tether 31 is depicted parallel to the Z-axis in Figure 1, the tether 31 is configured tiltable with reference to the main body 32 as a base point to form a predetermined angle with the Z-axis according to gravity gradient and atmospheric drag.

The tether 31 may be made of, for example, a flexible thin film component. The tether 31 may be made of one or a plurality of materials including resin, metal thin film (e.g., sputtered film), adhesive, carbon fiber-reinforced plastics (CFRP), and carbon film. The materials forming the tether 31 may also include conductive materials, such as aluminum fiber or other metallic fibers, or conductive high-strength fibers. The tether 31, having such conductivity, allows an electric current to flow through electromagnetic induction or from an external power supply, and the interaction of this current with the Earth's magnetic field generates a Lorentz force. The Lorentz force can thus be used as a part of thrust for deorbiting. The tether 31 may also include glue margins, for example, where thin film components are bonded together. These glue margins can also form regions subjected to atmospheric drag.

The predetermined three-dimensional shape of the deployed tether 31 is not particularly limited to a specific configuration as long as it can be subjected to enough atmospheric drag to remove the spacecraft 2 from orbit.

The predetermined three-dimensional shape may be a shape having high isotropy about the axis of the of the tether 31 (the Z-axis direction in Figure 1). The higher the isotropy about the axis of the longitudinal direction of the tether 31 (the Z-axis direction in Figure 1), the less variation in atmospheric drag the tether 31 experiences when rotating about the axis. This allows the tether to have enough projected area to experience atmospheric drag regardless of its attitude about the axis of the longitudinal direction. One example of a three-dimensional shape having high isotropy about the axis of the longitudinal direction of the tether 31 (the Z-axis direction in Figure 1) may be a substantially columnar shape such as the one shown in Figure 1. In this case, the longitudinal dimension of the tether 31 is not particularly limited, and may range from several meters to several kilometers, for example.

The tether 31 is subjected to gravity gradient. Gravity gradient is a force that orients an object's attitude toward a predetermined direction due to spatial variations in the gravitational acceleration acting on the object. More specifically, when an object orbiting around a center of gravity, such as the Earth, has an elongated shape like the tether 31, the gravity gradient produces a force that tends to align the longitudinal direction of the object toward the center of gravity. In other words, a force acts to decrease the angle between the longitudinal direction and the Z-axis.

As the longitudinal dimension of the tether 31 increases, the gravity gradient becomes more effective, causing the tether's longitudinal direction to align more readily with the zenith or nadir direction. The tether 31 may be designed with dimensions such that the longitudinal direction of the deployed tether 31 is effectively controlled to align with the zenith or nadir direction by the gravity gradient acting on it. The phrase "effectively controlled to align with the zenith or nadir direction" with respect to the longitudinal direction of tether 31 may also include the meaning that the longitudinal direction of the tether 31, when it is oriented toward the zenith or nadir, does not tilt so as to reach a predetermined angle θ relative to the Z-axis, even under the influence of atmospheric drag. More specifically, the specific angle θ may be a right angle (90°). The dimensions of the tether 31 will be described later in more detail. When the tether 31 is bent, its longitudinal direction may be determined based on the directions of its respective segments. More specifically, the longitudinal direction may be defined as the average direction of the respective segments of the tether 31, or alternatively, as the direction of a straight line approximating the overall shape of the tether 31.

(2) Tether storage and other structures

The tether storage structure of the deorbit device 3 is described with reference to Figure 2 and Figure 3.

The main body 32 may include a storage part 33, a gas source 34, an electromagnetic valve 35, a control unit 36, and a communication unit 37, all inside a housing. The main body 32 may further include a power supply (not shown), such as a solar panel, provided on a surface of the housing.

The gas source 34 may store gas that is to be supplied to the tether 31. The gas source 34 may be configured as a gas cartridge, for example. The gas supplied to the tether 31 is not particularly limited to a particular gas, and may be nitrogen gas, for example.

The electromagnetic valve 35 may be connected to each of the gas source 34 and the tether 31. The electromagnetic valve 35 may regulate the amount of gas supplied from the gas source 34 to the tether 31 by adjusting the degree of opening based on a control signal received from the control unit 36.

The control unit 36 integrally controls the deorbit device 3. The control unit 36 may be configured as a computer that includes a processor, such as a CPU (Central Processing Unit), and a memory, such as a RAM (Random Access Memory) and a ROM (Read Only Memory). The control unit 36 may control an open/close lid (not shown) provided for the storage part 33 to open and close. Opening the open/close lid allows the tether 31 to be released to the outside of the storage part 33. The gas source 34, electromagnetic valve 35, and control unit 36 form a "gas supply part." Namely, the control unit 36 may regulate the supply of gas (including parameters such as the pressure and flow rate of the supplied gas) from the gas source 34 to the tether 31 by controlling the opening and closing of the electromagnetic valve 35. The control unit 36 can thereby control the deployment speed of the tether 31. The control unit 36 may control the opening and closing of the electromagnetic valve 35 based on a control signal received from the communication unit 37. Alternatively, the control unit 36 may execute a program preinstalled in a memory such as the ROM to control the opening and closing of the electromagnetic valve 35 based on various detection signals obtained by various sensors (such as altimeters) that are not shown.

The communication unit 37 is a communication module for sending and receiving communication signals to and from some external equipment. The communication unit 37 may be configured with an antenna and a communication circuit. The communication unit 37 may receive signals from a management apparatus on the ground or from other spacecraft and provide them to the control unit 36. The communication unit 37 may also transmit signals from the control unit 36 to a management apparatus on the ground or other spacecraft.

The storage part 33 may be configured to include an internal space to accommodate the tether 31. The tether 31 can be stored in the storage part 33 in any manner. For example, the tether 31 may be coiled as shown in Figure 3, or may be folded. Alternatively, the tether 31 may be folded once along its longitudinal direction and rolled up for storage in the storage part 33.

One end 31T of the tether 31 may be configured as a fixed end fixedly attached to the main body 32 at a predetermined position. This tether end 31T may be connected to the gas source 34 via the electromagnetic valve 35. The other end 31F of the tether 31 may be configured as a free end that is not fixed to the main body 32. The tether 31 may be stored in the storage part 33 during a mission of the spacecraft 2, for example.

The tether 31 may include a slave device in the end 31F. The slave device may be configured as a sensor for detecting a predetermined parameter, for example. The slave device may be configured as a communication module for sending and receiving communication signals to and from some external equipment, and may include an antenna and a communication circuit. The slave device may include a processor, such as a CPU (Central Processing Unit), and a memory, such as a RAM (Random Access Memory) and a ROM (Read Only Memory). The slave device may acquire the location information of the spacecraft 2 or itself (distance and direction from the main body 32), or the deployment status of the tether 31, and send and receive the information to and from the control unit 36, or to and from a management apparatus on the ground or other spacecraft.

For example, an initiation signal to start tether deployment is sent from a management apparatus on the ground or another spacecraft when the spacecraft completes its mission or at some other predetermined time. The communication unit 37 receives the initiation signal and provides the initiation signal to the control unit 36. The control unit 36 opens the open/close lid (not shown) provided for the storage part 33 in response to the initiation signal. The control unit 36 also controls the opening and closing of the electromagnetic valve 35 in response to the initiation signal to supply gas from the gas source 34 to the tether 31.

The rate at which the tether 31 is deployed by the supply of gas is not particularly limited. For example, the tether can be deployed at a rate requiring several hours to extend one meter, or at a rate requiring several days to several months for full deployment of the tether 31. As the deployed tether 31 experiences atmospheric drag, the spacecraft 2, carrying the deorbit device 3, slows down, gradually departs from its orbital trajectory, and eventually descends into the Earth's atmosphere. The time it takes for the spacecraft 2 to reenter the Earth's atmosphere since deorbit initiation is not particularly limited. It may range from several hours to several weeks, months, years, or even several decades.

(3) Tether dimensions

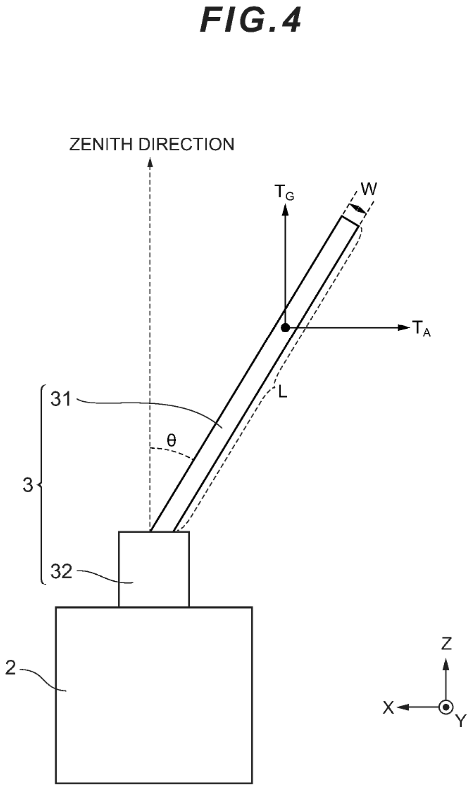

The dimensions of the tether 31 and how the dimensions affect the behaviors of the tether 31 are described with reference to Figure 4. The inventors of the present disclosure determined the dimensions of the tether 31 necessary for its longitudinal direction to be stably controlled in alignment with the zenith or nadir direction by gravity gradient even under the influence of atmospheric drag. These dimensions and the behaviors of the tether are explained below.

First, the work performed on the tether 31 by the torque generated in the tether 31 is determined based on an equation of motion of the tether 31.

The longitudinal and transverse dimensions of the tether 31 are represented by L(m) and W(m), respectively. The longitudinal and transverse dimensions of the tether 31 may be set as approximate parameters derived from its actual three-dimensional shape of the tether 31.

The following equation expresses the motion of the tether 31 as a simplified single rigid body.

[Math. 1]

$$\frac{dL_{AM}}{dt} = T$$

where T represents the disturbance torque [Nm] on the tether 31, $L_{AM}$ represents the angular motion [Js] of the tether 31, and d/dt represents the time derivative.

As shown in Figure 4, T primarily includes gravity gradient torque $T_G$, which is generated by the gravity gradient acting on the tether 31, and aerodynamic torque $T_A$, which is produced by atmospheric drag acting on the tether 31. Namely, the following equation holds:

[Math. 2]

$$L_{AM} = \int_t (T_G + T_A)\,dt = \int_\theta \frac{T_G + T_A}{\omega}\,d\theta$$

where $\theta$ represents the angle [deg] of the tether 31 relative to the Z-axis as shown in Figure 4, and $\omega$ represents the angular velocity [deg/s] of the tether 31.

The work performed on the tether 31 by the gravity gradient torque $T_G$ and aerodynamic torque $T_A$, when the tether 31 tilts relative to the Z-axis from a zero angle to an angle of $\theta$ with reference to the main body 32 as a base point, is expressed by the following equation:

[Math. 3]

$$L_{AM} \times \omega = \int_\theta (T_G + T_A)\,d\theta \cdots\cdots (1)$$

Next, the work performed on the tether 31 by the gravity gradient torque $T_G$ is determined.

Let $\theta$ denote the angle between the longitudinal direction of the tether and the Z-axis, the gravity gradient torque $T_G$ is expressed by the following equation:

[Math. 4]

$$T_G = \frac{\mu}{2R_0^{\ 3}} ML^2 \sin 2\theta$$

where $\mu$ represents the gravitational constant [$m^3/s^2$], $R_0$ represents the distance [m] from the Earth's center to the center of mass of the tether 31, and M represents the mass [kg] of the tether 31.

The work performed on the tether 31 by the gravity gradient torque $T_G$, when the tether 31 tilts relative to the Z-axis from a zero angle to an angle of $\theta$ with reference to the main body 32 as a base point, is expressed by the following equation:

[Math. 5]

$$\int_\theta T_G\, d\theta = \frac{\mu}{2R_0^{\ 3}} ML^2 \int_{0^\bullet}^\theta \sin 2\theta\, d\theta$$
$$= \frac{\mu}{2R_0^{\ 3}} ML^2 \sin^2 \theta \cdots\cdots (2)$$

If the tether 31 is made of a conductive material and a Lorentz force is generated in the tether 31, the gravity gradient torque $T_G$ may be extended to include the Lorentz force, and the work may be calculated accordingly.

Next, the work performed on the tether 31 by the aerodynamic torque $T_A$ is determined.

Let $\theta$ denote the angle between the longitudinal direction of the tether 31 and the Z-axis, the aerodynamic torque $T_A$ is expressed by the following equation:

[Math. 6]

$$T_A = -r_A \frac{1}{2} \rho V^2 S C_D \cos^2 \theta$$
$$= -r_A \frac{1}{2} \rho V^2 LW C_D \cos^2 \theta$$

where $r_A$ represents the distance [m] from the center of mass of the tether 31 to the aerodynamic center, $\rho$ represents the atmospheric density [$kg/m^3$], V represents the orbital tangential velocity of the deorbit device 3 (spacecraft 2) [m/s], and $C_D$ represents the drag coefficient [-].

Therefore, the work performed on the tether 31 by the aerodynamic torque $T_A$, when the tether 31 tilts relative to the Z-axis from a zero angle to an angle of $\theta$ with reference to the main body 32 as a base point, is expressed by the following equation:

[Math. 7]

$$\int_{\theta} T_A\, d\theta = -r_A \frac{1}{2}\rho V^2 LW C_D \int_{0^\bullet}^{\theta} \cos^2 \theta\, d\theta$$

$$= -r_A \frac{1}{4}\rho V^2 LW C_D (\theta + \sin \theta \cos \theta)$$

$$= -r_A \frac{1}{4}\rho V^2 LW C_D \left(\theta + \frac{1}{2}\sin 2\theta\right)$$

$$= -r_A \frac{1}{8}\rho V^2 LW C_D (2\theta + \sin 2\theta)$$

$$\cdots\cdots (3)$$

Next, the work performed on the tether 31 by each torque is determined.

Substituting Equations (2) and (3) into Equation (1) yields the following expression for Equation (1):

[Math. 8]

$$Work = \frac{\mu}{2R_0{}^3} ML^2 \sin^2 \theta - r_A \frac{1}{8}\rho V^2 LW C_D (2\theta + \sin 2\theta)$$

In order to control the longitudinal direction of the tether 31 to remain aligned with the zenith or nadir direction, i.e., so that the longitudinal direction of the tether 31, when oriented toward the zenith or nadir direction, does not tilt so as to reach a predetermined angle θ relative to the Z-axis even under atmospheric drag, the work expressed by Equation (1) must take a positive value. In other words, the following condition needs to be satisfied:

[Math. 9]

$$\frac{\mu}{2R_0{}^3} ML^2 \sin^2 \theta - r_A \frac{1}{8}\rho V^2 LW C_D (2\theta + \sin 2\theta) > 0$$

Solving this equation with respect to the aspect ratio (L/W), i.e., the ratio of the longitudinal dimension L to the transverse dimension W of the tether 31, yields the following equation:

[Math. 10]

$$\frac{L}{W} > \frac{R_0{}^3 r_A \rho V^2 C_D}{4\mu M} \frac{2\theta + \sin 2\theta}{\sin^2 \theta}$$

From the above, the threshold for the aspect ratio (L/W) of the longitudinal dimension L to the transverse dimension W of the tether 31, to control the longitudinal direction of the tether 31 in alignment with the zenith or nadir direction, is derived as follows:
[Math. 11]

$$\frac{R_0{}^3 r_A \rho V^2 C_D}{4\mu M} \frac{2\theta + \sin 2\theta}{\sin^2 \theta} \quad \cdots\cdots (4)$$

In other words, when the aspect ratio (L/W) exceeds this threshold, the tether 31 does not tilt so as to reach the predetermined angle θ between the longitudinal direction of the tether 31 and the Z-axis. Gravity gradient generates tension in the tether 31, which passively assists in maintaining an attitude subjected to atmospheric drag, thereby enabling the tether to experience a high level of atmospheric drag for deorbiting. Thus the longitudinal direction of the tether 31 is controlled stably in alignment with the zenith or nadir direction by gravity gradient.
When θ is set, in particular, to a right angle, i.e., when θ = 90°,

[Math. 12]

$$\left.\frac{2\theta + \sin 2\theta}{\sin^2 \theta}\right|_{\theta=90°} = \pi$$

Therefore, Equation (4) is transformed into:

[Math. 13]

$$\frac{R_0{}^3 r_A \rho V^2 C_D \pi}{4\mu M} W$$

Namely, when the aspect ratio is equal to or greater than this value, the tether 31, with its longitudinal direction oriented toward the zenith or nadir, does not tilt so as to reach 90° even under atmospheric drag. When the angle θ between the longitudinal direction of the tether 31 and the Z-axis exceeds 90°, the influence of the gravity gradient force acting respectively on the distal end portion (free end 31F) and the proximal end portion (the portion connected to the main body 32) of the tether 31 is reversed. As a result, the proximal end portion of the tether 31 tends to orient toward the zenith or nadir about the distal end portion as a pivot, which increases the likelihood of entanglement of the tether 31.
According to this embodiment, with the tether 31 being designed based on the dimensions described above, the tension generated by gravity gradient after tether deployment passively maintains an attitude subjected to atmospheric drag, so that the deorbit device 3 can experience a high level of atmospheric drag for deorbiting. While a high level of atmospheric drag is obtained for deorbiting, disturbance of the attitude subjected to atmospheric drag due such drag, and entanglement of structures with the spacecraft, are minimized. This allows the deorbit device 3 to maintain its performance over an extended period.

(4) Relationship between the altitude and the aspect ratio threshold

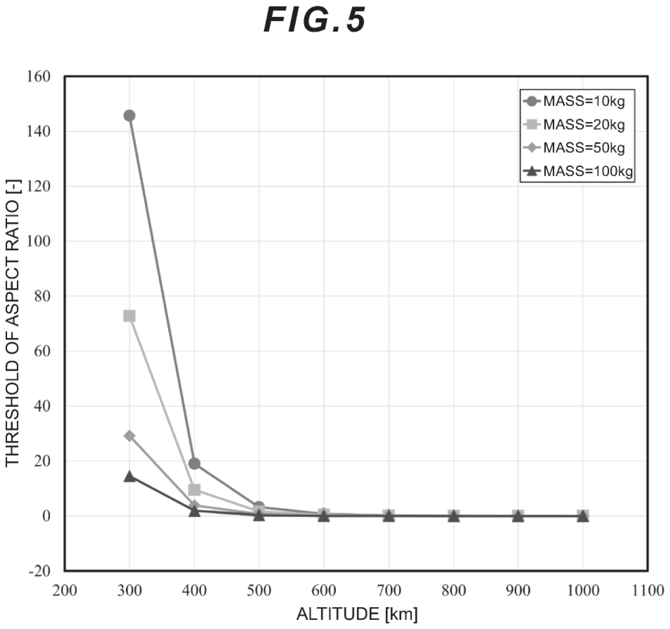

The relationship between the altitude and the aspect ratio threshold is explained with reference to Figure 5. Figure 5 is a graph showing the relationship between the orbit altitude and the aspect ratio threshold of tethers of varying masses. The horizontal axis represents the altitude (km) of the spacecraft, and the vertical axis represents the threshold of the aspect ratio (L/W).

For example, when the orbit altitude of a tether 31 with a mass of 100 kg is 300 km, the threshold aspect ratio is about 14.6. This means that, for a tether 31 having a mass of 100 kg, when the orbital altitude is 300 km and the aspect ratio is about 14.6 or greater (i.e., when the longitudinal dimension L of the tether 31 is about 14.6 times or more the transverse dimension W), the longitudinal direction of the tether 31 can be stably controlled to align with the zenith or nadir direction by the gravity gradient.

When the orbit altitude is 300 km, the greater the mass of the tether 31, the smaller the threshold aspect ratio. Accordingly, when the longitudinal dimension L and the transverse dimension W of the tether 31 are set such that the aspect ratio is around the threshold of 14.6 (i.e., when the longitudinal dimension L is set to be about 14.6 times the transverse dimension W), even if the mass of the tether 31 is 100 kg or more, the longitudinal direction of the tether 31 can still be stably controlled to align with the zenith or nadir direction by the gravity gradient at the altitude of 300 km.

For example, when a tether 31 with a mass of 100 kg is deployed on its trajectory at an altitude of 500 km, the atmospheric drag increases as the altitude decreases to 400 km and then to 300 km. In this case, in order for the spacecraft 2 to continue to experience atmospheric drag in a stable manner even after reaching an altitude of 300 km, the aspect ratio required for the longitudinal direction of the tether 31 to be stably controlled in alignment with the zenith or nadir direction by gravity gradient, i.e., the ratio of the longitudinal dimension of the tether 31 relative to the transverse dimension, must be greater than 14.6, which is the threshold at the altitude of 300 km.

Increasing the aspect ratio of the tether 31 enables even spacecraft with smaller mass to reenter Earth's atmosphere, or allows reentry within a shortened target timeframe.

(5) Variation examples

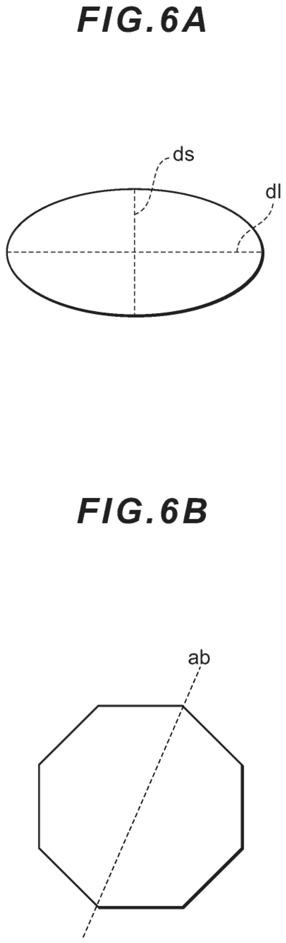

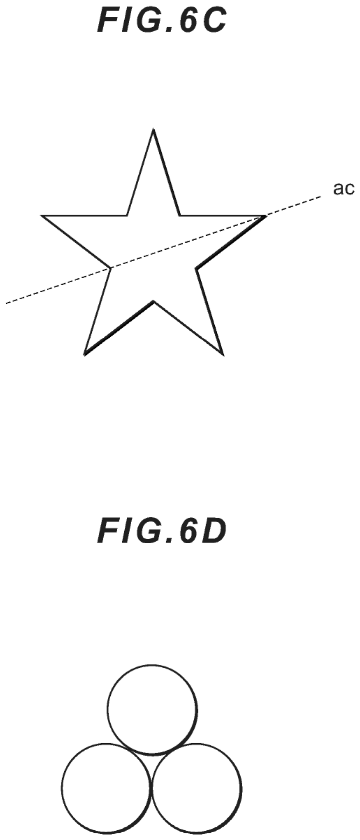

Variation examples of the deorbit device are described with reference to Figure 6A to Figure 6D. Figure 6A to Figure 6C are diagrams showing examples of cross-sectional shapes perpendicular to the longitudinal direction of the tether 31 in variation examples. Figure 6D is a diagram showing yet another example of the cross-sectional shape perpendicular to the longitudinal direction of three tethers 31 of a deorbit device 3 in a variation example.

As shown in Figure 6A, the tether 31 may have an elliptic cross-sectional shape perpendicular to its longitudinal direction. In the case of an elliptic shape, the isotropy of the tether 31 about its axis of the longitudinal direction can be evaluated, for example, based on the ratio of the length of the minor (short) axis ds to the length of the major (long) axis dl, i.e., the ellipticity. The ellipticity of the cross-sectional shape perpendicular to the longitudinal direction of the tether 31 in this embodiment is preferably 0.5 or greater, more preferably 0.6 or greater, still more preferably 0.7 or greater, still more preferably 0.8 or greater, still more preferably 0.9 or greater, and still more preferably 0.95 or greater.

As shown in Figure 6B, the tether 31 may have a polygonal cross-sectional shape perpendicular to its longitudinal direction. Figure 6B shows one example in which the tether 31 has a regular octagonal cross-sectional shape perpendicular to its longitudinal direction. In the case of a regular polygonal shape, the isotropy of the tether 31 about its axis of the longitudinal direction can be evaluated, for example, based on the number of axes of line symmetry. In the case of a regular octagon, a line connecting two opposing vertices is an axis of line symmetry as shown by the dotted line ab in Figure 6B. There are four such axes of line symmetry. The tether 31 according to this embodiment may have any polygonal cross-sectional shape perpendicular to its longitudinal direction other than a regular octagon. The cross-sectional shape preferably has one or more axes of line symmetry, more preferably two or more axes of line symmetry (e.g., a rectangle), still more preferably three or more axes of line symmetry (e.g., a regular triangle), and still more preferably four or more axes of line symmetry (e.g., a square).

As shown in Figure 6C, the tether 31 may have a pentagrammic cross-sectional shape perpendicular to its longitudinal direction. In the case of a pentagram, a line connecting two opposing convex and concave vertices is an axis of line symmetry, as shown by the dotted line ac in Figure 6C. There are five such axes of line symmetry.

The cross-sectional shape of the tether 31 is not particularly limited to the pentagram shown in the drawing and may be any other star-shaped polygon, such as a hexagram, or a stellated figure.

Figure 6D is a diagram showing a cross-sectional shape of the tethers 31 of a deorbit device 3 having three substantially cylindrical tethers. The deorbit device 3 may have a plurality of tethers 31 as in this example. By having a plurality of tethers 31, in the event of a gas leak from a hole in one of the tethers 31, the other tethers 31 can ensure the function of the deorbit device 3. The tethers 31 may have the same radius, or may have different radii. The arrangement of the tethers 31 is not particularly limited. For example, the tethers 31 may be arranged so that their centers are located near the vertices of a triangle as shown in Figure 6D. The plurality of tethers 31 may be individually tiltable relative to the Z-axis with reference to the main body 32 as a base point. Alternatively, at least two of the plurality of tethers 31 may be connected to each other. Even in the case of a plurality of tethers 31, if axes of line symmetry can be defined, the isotropy of the tethers 31 about their longitudinal axes can be evaluated based on the number of such symmetry axes.

The tethers 31 shown in Figure 6B, Figure 6C, and Figure 6D, in particular, have a greater number of side faces compared to a tether 31 with a substantially cylindrical three-dimensional shape. The greater number of side faces increases the rigidity of the tether 31, which allows the deployed tether 31 to maintain its three-dimensional shape more easily.

The isotropy of the tethers 31 about their longitudinal axes may be evaluated using any criterion other than the number of axes of line symmetry in the cross-sectional shape perpendicular to the longitudinal direction of the tether 31. For example, the isotropy may be evaluated based on a criterion derived from the projected area of the tether 31 onto a predetermined surface parallel to its longitudinal direction (including a projected area per unit length along the longitudinal direction). This projected area allows for determining the minimum area of the tether 31, when rotated about its axis of the longitudinal direction, that is necessary to experience atmospheric drag. For example, a function of the rotation angle around the axis and the projected area can be obtained by rotating the tether 31 one turn about its axis of the longitudinal direction. In this case, the difference between the maximum and minimum values of the projected area, or their ratio, may be used as a criterion for isotropy about the axis of the longitudinal direction of the tether 31. Alternatively, the average value of the projected area, or the ratio of the maximum or minimum value to the mean value, may be used as a criterion for isotropy about the axis of the longitudinal direction of the tether 31. In the case where the ratio of the minimum value of the projected area to the maximum value is used as the criterion, for example, the ratio is preferably 0.5 or greater, more preferably 0.6 or greater, still more preferably 0.7 or greater, still more preferably 0.8 or greater, still more preferably 0.9 or greater, and still more preferably 0.95 or greater.

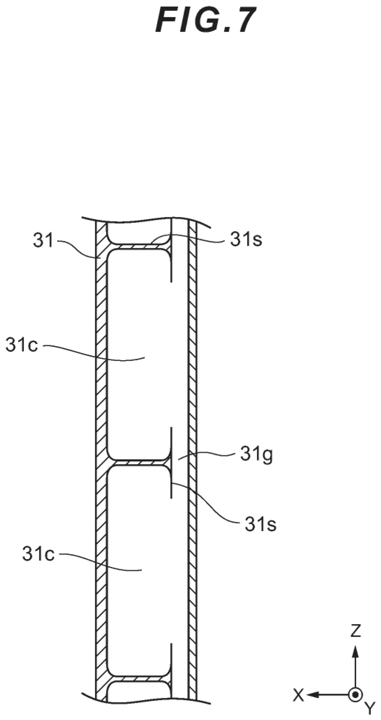

Figure 7 is a diagram showing a cross-sectional shape parallel to the longitudinal direction of the tether 31 in a variation example. As shown in Figure 7, the tether 31 may have a plurality of compartments 31c, which are separated by partition members 31s and connected via a gas supply channel 31g. This allows the tether 31 to maintain its structure more easily even when its longitudinal dimension is extended. The partition members 31s may be formed as one piece with the tether 31, or as separate components. The number of compartments 31c is not particularly limited. There may be two, three, four, or more compartments. Different compartments 31c may have the same dimensions, or may each have different dimensions. The gas supply channel 31g may be provided with a one-way valve at locations where the compartments 31c are separated, for example. Dividing the interior of the tether 31 into multiple compartments 31c can minimize the risk of deployment failure caused by a gas leak due to a hole in the tether 31 in the event of a collision with debris or other flying objects.

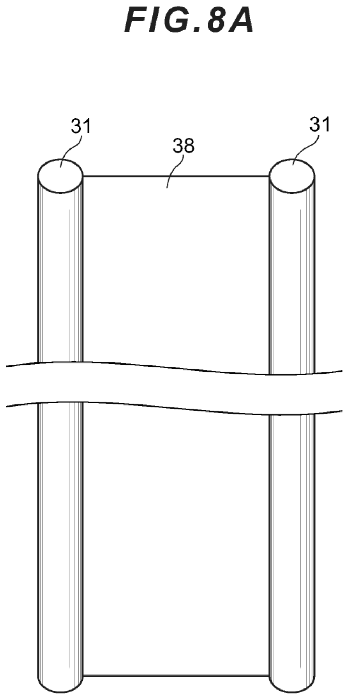

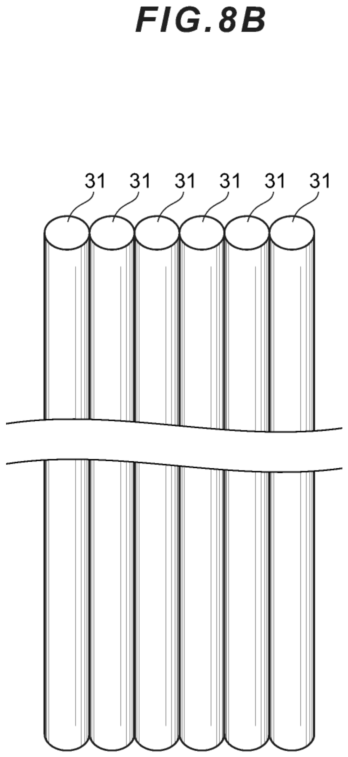

Variation examples of the deorbit device 3 are described with reference to Figure 8A and Figure 8B.

Figure 8A is a schematic diagram illustrating an outer view of two tethers 31 and a film part 38 of a deorbit device 3 in a variation example. As shown in Figure 8A, the deorbit device 3 may have a structure with two substantially cylindrical tethers 31 and a film part 38 between the tethers. The film part 38 may be made of the same material as the tethers 31, or made of a different material. The film part 38 may be made of a thin material for weight reduction. The two substantially cylindrical tethers 31 each have an inflatable structure. The film part 38 may not necessarily have an inflatable structure. The structure shown in Figure 8A allows more atmospheric drag to be obtained compared to the case where there is only one substantially cylindrical tether 31.

Figure 8B is a schematic diagram illustrating an outer view of six tethers 31 of a deorbit device 3 in a variation example. As shown in Figure 8B, the deorbit device 3 may have a structure in which a series of substantially cylindrical inflatable tethers 31 are aligned. Figure 8B shows six tethers 31 in a line, in particular. The structure shown in Figure 8B allows more atmospheric drag to be obtained compared to the case where there is only one substantially cylindrical tether 31. For example, this structure allows more atmospheric drag to be obtained compared to the configuration with only one substantially cylindrical tether 31 particularly when the deorbit device 3 continues to rotate about the axis of the longitudinal direction of the tether 31 due to the influence of atmospheric drag. According to this configuration, resistance to gas leaks is improved, since a gas leak in one tether 31 does not cause a gas leak in another tether 31. Another benefit is that the amount of gas needed per unit area to experience atmospheric drag is reduced.

As described above, the tether 31 according to this embodiment has an inflatable structure. Therefore, compared to tethers without an inflatable structure, in the deorbit device 3 according to this embodiment, the tether can be deployed and the deployed state can be maintained more easily. Moreover, in the deorbit device 3 according to this embodiment, by designing the tether 31 based on the dimensions described above, tension is generated by gravity gradient even after the tether has fully deployed. This tension passively maintains an attitude subjected to atmospheric drag, enabling the tether to experience a high degree of atmospheric drag for deorbiting. While a high level of atmospheric drag is obtained for deorbiting, disturbance of the attitude subjected to atmospheric drag due such drag, and entanglement of structures with the spacecraft, are minimized. This allows the deorbit device 3 to maintain its performance over an extended period.

Elongated string- or band-like tethers previously had a high likelihood of rolling back from the tip toward the base when fully deployed and extended. In contrast, the tether 31 according to this embodiment, having an inflatable structure, can suppress such rolling back, since the gas filling the interior allows a predetermined three-dimensional shape to be maintained more reliably.

The embodiment described above is given for facilitating the understanding of the present invention and not for limiting the interpretation of the present invention. Various elements in the embodiment, arrangements, materials, conditions, shapes, sizes are not particularly limited to the illustrated examples and may be changed as required. Various features illustrated in different forms of embodiment can be partially interchanged or combined.

**Reference Signs List**

2        Spacecraft

3        Deorbit device

31       Tether

32       Main body

33       Storage part

34       Gas source

35       Electromagnetic valve

36       Control unit

37       Communication unit

L        Longitudinal dimension of tether

W        Transverse dimension of tether

31c      Compartment

31s      Partition member

31g      Supply channel

**Claims**

1.  A deorbit device mounted on an object moving in an orbit in space, the deorbit device comprising a tether configured to expand by gas supplied thereinto to form a predetermined three-dimensional shape to be subjected to atmospheric drag to deorbit the object from the orbit.

2.  The deorbit device according to claim 1, wherein the tether is made of a flexible thin film.

3.  The deorbit device according to claim 1 or 2, wherein a longitudinal direction of the tether is controlled in alignment with a zenith or nadir direction by gravity gradient acting on the tether.

4.  The deorbit device according to claim 3, wherein the tether has an aspect ratio L/W, where L represents a longitudinal dimension of the three-dimensional shape and W represents a transverse dimension of the three-dimensional shape, the aspect ratio L/W being set to a predetermined threshold or greater such that the longitudinal direction of the tether, oriented toward the zenith or nadir direction, does not tilt so as to be horizontal even under atmospheric drag.

5.  The deorbit device according to claim 4, wherein the predetermined threshold is defined by expression below:
    [Math. 1]

$$\frac{R_0{}^3 r_A \rho V^2 C_D}{4\mu M} \frac{2\theta + \sin 2\theta}{\sin^2 \theta} \quad \cdots\cdots (4)$$

where $R_0$ represents a distance from the Earth's center to a center of mass of the tether, $r_A$ represents a distance from the center of mass of the tether to an aerodynamic center, $\rho$ represents an atmospheric density, V represents a tangential speed of the tether in an orbit, M represents the mass of the tether, and $\theta$ represents an angle between the zenith or nadir direction and the longitudinal direction of the tether.

6. The deorbit device according to claim 5, wherein the angle $\theta$ is set to a right angle.

7. The deorbit device according to any one of claims 1 to 6, further comprising a storage part configured to store the tether.

8. The deorbit device according to any one of claims 1 to 7, wherein the tether comprises a conductive material.

9. The deorbit device according to any one of claims 1 to 8, further comprising a gas supply part configured to supply the gas into the tether.

10. The deorbit device according to claim 9, wherein the gas supply part is configured to control pressure or flow rate of the gas supplied to the tether.

11. A deorbiting method of deorbiting an object moving in an orbit in space by using the deorbit device according to any one of claims 1 to 10, the method comprising a step of expanding the tether by supplying gas to the tether to form the predetermined three-dimensional shape of the tether.

# FIG.1

# FIG.2

# FIG.3

# FIG.4

EP 4 729 421 A1

# FIG.5

# FIG.6A

# FIG.6B

# FIG.6C

# FIG.6D

# FIG.7

# FIG.8A

# FIG.8B

## INTERNATIONAL SEARCH REPORT

| International application No. |
| --- |
| **PCT/JP2023/021962** |

**A. CLASSIFICATION OF SUBJECT MATTER**

*B64G 1/22*(2006.01)i; *B64G 1/62*(2006.01)i
FI: B64G1/22 224; B64G1/62

According to International Patent Classification (IPC) or to both national classification and IPC

**B. FIELDS SEARCHED**

Minimum documentation searched (classification system followed by classification symbols)

B64G1/22; B64G1/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 3-246200 A (NEC CORPORATION) 01 November 1991 (1991-11-01) p. 2, fig. 1-2 | 1-6, 9-11 |
| Y | | 7-8 |
| Y | JP 2021-115713 A (JAPAN AEROSPACE EXPLORATION AGENCY) 10 August 2021 (2021-08-10) paragraphs [0027], [0038]-[0040], fig. 1, 5 | 7-8 |
| A | JP 2001-97290 A (NIPPON TELEGRAPH AND TELEPHONE CORPORATION) 10 April 2001 (2001-04-10) | 1-11 |
| A | US 2020/0108953 A1 (THE AEROSPACE CORPORATION) 09 April 2020 (2020-04-09) | 1-11 |
| A | WO 2018/154603 A1 (PES UNIVERSITY) 30 August 2018 (2018-08-30) | 1-11 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 July 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/021962**

| Patent document cited in search report | | | Publication date (day/month/year) | Patent family member(s) | Publication date (day/month/year) |
|---|---|---|---|---|---|
| JP | 3-246200 | A | 01 November 1991 | (Family: none) | |
| JP | 2021-115713 | A | 10 August 2021 | WO 2021/149553 A1 paragraphs [0027], [0038]-[0040], fig. 1, 5 | |
| JP | 2001-97290 | A | 10 April 2001 | (Family: none) | |
| US | 2020/0108953 | A1 | 09 April 2020 | (Family: none) | |
| WO | 2018/154603 | A1 | 30 August 2018 | (Family: none) | |

Form PCT/ISA/210 (patent family annex) (January 2015)

**REFERENCES CITED IN THE DESCRIPTION**

**Patent documents cited in the description**

- JP 2022143395 A

- JP 2021115713 A